# EUROPEAN PATENT SPECIFICATION

(11) **EP 0 666 993 B1**
(45) Date of publication and mention of the grant of the patent: **09.06.1999**
(21) Application number: 93923287.2
(22) Date of filing: 05.10.1993
(51) Int. Cl.: G02B 1/10, G02B 5/26, G02B 5/28

(54) **FORMABLE REFLECTIVE MULTILAYER BODY**
FORMBARER REFLEKTIERENDER MULTISCHICHTENKÖRPER
CORPS MULTICOUCHE REFLECTEUR FACONNABLE

(30) Priority: 29.10.1992 US 969710
(43) Date of publication of application: 16.08.1995
(73) Proprietor: MINNESOTA MINING AND MANUFACTURING COMPANY, St. Paul, Minnesota 55133-3427 (US)
(72) Inventor: SCHRENK, Walter, J., Midland, MI 48642 (US); ARENDS, Charles, B., Midland, MI 48642 (US); BALAZS, Conrad, F., Midland, MI 48640 (US); LEWIS, Ray, A., Midland, MI 48640 (US); WHEATLEY, John, A., Midland, MI 48640 (US)
(74) Representative: Burford, Anthony Frederick
(86) International application number: PCT/US93/09560
(87) International publication number: WO 94/10589

(56) References cited:
- EP-A- 0 404 463
- EP-A- 0 491 551
- US-A- 3 711 176
- POLYMER ENGINEERING AND SCIENCE vol. 13, no. 1 , January 1973 , US pages 216 - 221 RADFORD ET AL 'Reflectivity of Iridescent Coextruded Multilayered Plastic Films' cited in the application

## Description

The present invention relates to a formable multilayer polymeric body which exhibits image sharpness and a high degree of reflectance over substantially the entire visible region of the spectrum (that is, substantially colorless), and to articles produced therefrom which may find use as mirrors, reflectors and other reflective parts and trim, lenses, and polarizers.

Conventional methods for fabricating reflective surfaces include forming such surfaces of highly polished metals. Because of the high costs and fabricating problems involved in using metals, more recently fabricators have used plastic surfaces which contain thin coatings of metal thereon. Thus, metal coated plastic articles are now commonly found as both decorative and functional items in a number of industries including commercial and industrial lighting applications. Such articles are used as bright work for consumer appliances such as refrigerators, dishwashers, washers, dryers and radios. These types of articles are also used by the automotive industry as head lamp reflectors, bezels, radio knobs, and automotive trim.

Typically, such metal coated plastic articles are formed by electroplating or by the vacuum, vapor, or chemical deposition of a thin metal layer on the surface of the article. It has been observed that such coatings are subject to chipping and flaking of the metal as well as corrosion of the metal over time. If additional protective layers must be applied over the metal coating to protect it, additional labor and materials costs are involved. Further, there may be environmental disposal problems with some metal deposition processes.

Thermoforming equipment is widely available and capable of being readily adapted to form a variety of shapes and finished parts from sheets of thermoplastic material. One major drawback in the use of metal coated plastic articles is that the metal must be deposited on a plastic surface which has been previously shaped into a finished article. This limits the users of such processes to those who have the capability of vacuum or other metallization techniques. Thus, sheets of metallized thermoplastic cannot generally be thermoformed into articles requiring significant draw.

Multilayer articles of polymers are known, as are methods and apparatuses for making such articles. For example, such multilayered articles may be prepared utilizing multilayer coextrusion devices as described in US-A-3,773,882 and US-A-3,884,606 to Schrenk. US-A-3,773,882 teaches a method for the preparation of a composite stream of interdigitated diverse synthetic resinous materials. The steps of the method are providing at least a first stream and a second stream of heat plastified extrudable thermoplastic material; dividing each of the streams into a plurality of first substreams and a plurality of second substreams, respectively; combining the substreams to form a composite stream having the first substreams and the second substreams interdigitated, with the further limitation that the substreams are combined at locations which are generally disposed on an arc of a circle; deforming the composite stream by causing the substreams thereof to flow in a generally radially inward manner to a discharge location generally disposed at the center of the circle; the discharge location being generally equidistant from locations of combination of adjacent first and second substreams; removing the composite stream from the discharge location; and deforming the stream into a generally sheet-like configuration wherein the interfaces between streams are generally parallel to the major surfaces of the sheet-like configuration. US-A-3,884,606 teaches an apparatus for the preparation of a multilayer film or sheet, the apparatus comprising a body, the body defining at least a first polymer entrance passage, a first plenum in communication with the first polymer passage, a stream dividing means to divide material flowing from the first passage into a plurality of first substreams, second polymer receiving means in operative communication with a second plenum, the second plenum discharging to the dividing means which divides the second stream into a plurality of second substreams and interdigitates the plurality of second substreams with the first substreams, the dividing means being in operative communication with a third or composite stream receiving plenum, the composite stream comprising the combined first and second substreams, a third plenum discharge passage in operative communication with the third plenum and adapted to receive the composite stream from the third plenum, the discharge means being in combination with a die having a generally slot-like extrusion orifice, the discharge passage having a first or receiving end and a second or discharge end, the discharge portion of the stream dividing means being disposed in an arcuate manner to form an arc of a circle wherein the discharge portion is generally equidistant from the discharge end of the third plenum discharge passage. Such devices are capable of simultaneously extruding diverse thermoplastic polymeric materials in substantially uniform layer thicknesses. The number of layers may be multiplied by the use of a device as described in US-A-3,759,647 to Schrenk et al. This patent describes an apparatus for the preparation of a composite synthetic resinous sheet-like article having in cooperative combination a means for providing at least two streams of heat plastified thermoplastic resinous material, a means for mechanically arranging the two streams into a composite stream having a plurality of generally parallel layers wherein a portion of one stream encapsulates the composite stream, a means for mechanically manipulating the composite stream to provide an increased number of layers in the manipulated stream, and a means for shaping the manipulated stream into a desired configuration having a plurality of layers generally parallel to a major surface of the desired configuration.

Alfrey, Jr. et al, US-A-3,711,176, teaches a multilayered highly reflective thermoplastic body fabricated using optically thin film techniques. That is, the reflective thin film layers of Alfrey, Jr. et al. rely on the constructive interference of light to produce reflected visible, ultraviolet, or infrared portions of the electromagnetic spectrum. Such reflective thin films have found use in decorative items because of the iridescent reflective qualities of the film. Also, Cooper, US-A-Re. 31,780 describes improvements in multilayer light-reflecting film are effected by the use of a transparent thermoplastic resinous laminate film of at least 10 very thin layers of substantially uniform thickness, said layers being generally parallel, the contiguous adjacent layers being of different transparent thermoplastic resinous materials one of which is a thermoplastic polyester or copolyester resin having a refractive index of 1.55-1.61 and the adjacent resinous material having a refractive index which is lower by at least 0.03, the contiguous adjacent layers differing in refractive index by at least 0.03.

However, the films of Alfrey, Jr. are extremely sensitive to thickness changes, and it is characteristic of such films to exhibit streaks and spots of nonuniform color. Further, color reflected by such films is dependent on the angle of incidence of light impinging on the film. Thus, such films are not practical for uses which require uniformity of reflectivity (that is, colorless and substantially noniridescent). Moreover, such films are not practical to thermoform into articles as localized thinning of the layers during thermoforming causes alterations in the iridescent coloring and reflective characteristics of the films.

Radford et al., "Reflectivity of Iridescent Coextruded Multilayered Plastic Films", Polymer Engineering and Science, vol. 13, No. 3 (May 1973), proposed introducing a linear layer thickness gradient into a multilayer optically thin film to produce a film which would reflect the majority of the visible spectrum and exhibit a metallic appearance. Again, however, the films proposed by Radford et al. would not be practical to thermoform into articles as localized thinning of the layers during thermoforming would cause alterations in the reflective characteristics of the films and induce iridescent colors.

More recently, multilayer coextrusion technology has been used to fabricate reflective multilayer films and sheets made up of optically thick layers (optical thickness of greater than 0.45 µm) or a combination of optically thick and optically very thin layers (optical thickness of less than 0.09 µm) as seen in Wheatley et al, US-A-5,122,905, Wheatley, US-A-5,122,906, and Wheatley et al., US-A-5,126,880. US-A-5,122,905 describes a multilayered reflective body which is thermoformable and capable of being fabricated into relatively thick parts while maintaining uniform reflectivity. The reflective polymeric body includes at least first and second diverse polymeric materials of a sufficient number of alternating layers of the first and second polymeric materials such that at least 30% of the light incident on the body is reflected. A substantial majority of the individual layers of the body have an optical thickness of at least 0.45 micrometers, and adjacent layers of the first and second polymeric materials differ from each other in refractive index by at least 0.03. The reflective body may be fabricated into, for example, sheets, mirrors, noncorroding metallic appearing articles and parts, reflectors,or reflective lenses. US-A-5,122,906 describes a multilayered reflective body which is thermoformable and capable of being fabricated into films, sheets, and a variety of parts while maintaining uniform reflectivity. The reflective polymeric body includes at least first and second diverse polymeric materials of a sufficient number of alternating layers of the first and second polymeric materials such that at least 30% of the light incident on the body is reflected. A substantial majority of the individual layers of the body have an optical thickness of not more than 0.09 micrometers or not less than 0.45 micrometers, with at least one of the individual layers having an optical thickness of not more than 0.09 micrometers, and adjacent layers of the first and second polymeric materials differ from each other in refractive index by at least 0.03. US-A-5,126,880 describes a multilayered, highly reflective polymeric body comprising at least two types of optical layers which is thermoformable and capable of being fabricated into films, sheets and a variety of parts while maintaining uniform reflectivity. The reflective polymeric body includes at least first and second diverse polymeric materials having a sufficient number of layers of the first and second polymeric materials such that at least 30% of light incident on the body is reflected. A portion of the layers have optical thicknesses between 0.09 and 0.45 µm, and the remaining layers have optical thicknesses of not greater than 0.09 µm or not less than 0.45 µm. The first and second polymeric materials differ from each other in refractive index by at least 0.03. This is a uniformly reflective all polymer body in which the iridescent effects from optically thin layers are masked.

While such multilayer bodies reflect substantially uniformly over the entire visible spectrum and are essentially colorless and noniridescent, there are drawbacks to their use in the thermoforming of articles. To maintain high reflectivity, relatively thick sheets (for example, 2.5 mm or thicker) of a thousand or more layers must be used. Drawing of such sheets during thermoforming, even for relatively low draw ratios of 2:1 or less, also may bring on the onset of undesirable iridescence as optically thick layers in the sheet are thinned into the optically thin range. Even when drawn, the sheet thickness may still be greater than that desired for a particular application.

Accordingly, the need still exists in this art for a formable multilayer polymeric body which exhibits image sharpness and has a high substantially uniform reflectivity in the visible region of the spectrum and which can maintain such uniform reflectivity during drawing conditions typically encountered in thermoforming operations.

The present invention meets that need by providing a thermoformable multilayer reflective polymeric body which has a substantially uniform broad bandwidth reflectance over substantially the entire range of the visible spectrum to provide substantially uniform reflectivity, and in which the gradient of optical layer repeat unit thickness is a quartic function. By "substantially uniform reflectivity", we mean an essentially colorless, noniridescent reflective appearance. The body also exhibits image sharpness, that is, non-blurred image edges in reflection. Further, the body may be thermoformed and drawn without affecting this substantially uniform reflectivity. In another embodiment, the body may be made to be variably reflective.

The terms "reflective", "reflectivity", "reflection", and "reflectance" as used herein refer to total reflectance (that is, ratio of reflected wave energy to incident wave energy) sufficiently specular in nature such that the polymeric body has a metallic appearance. The use of these terms is intended to encompass semi-specular or diffuse reflection such as that of brushed metal or pewter. In general, reflectance measurement refers to reflectance of light rays into an emergent cone with a vertex angle of 15 degrees centered around the specular angle.

A specific intensity of reflectance, when used herein, is the intensity of reflection which occurs at a wavelength where negligible absorption occurs. For example, a silver appearing (colorless) article reflects substantially all visible wavelengths, whereas the introduction of a dye to achieve other metallic hues will necessarily lower reflectivity of the body at the absorbing wavelengths. Wavelengths unaffected by the dye will be reflected at essentially the same intensity as a non-dyed sample, and it is at these unaffected wavelengths to which the intensity of reflection is referring.

According to one aspect of the present invention, there is provided a thermoformable polymeric multilayer reflective body (10) having substantially uniform reflectivity over substantially the entire range of the visible spectrum, comprising:
at least first and second diverse polymeric materials (A,B) differing from each other in refractive index by at least 0.03, the body comprising a sufficient number of alternating layers (12,14) of said first and second polymeric materials (A,B) such that at least 40 percent of visible light incident on said body is reflected, a substantial majority of the individual layers (12,14) of said body having optical thicknesses such that the sum of the optical thicknesses of the layers in a repeat unit of said alternating layers is greater than 190 nm, wherein the multilayer body has a gradient of optical layer repeat unit thicknesses spanning a range of optical repeating unit thicknesses of at least 190 nm to a value of 340 nm times a predetermined draw ratio of the initial to final thickness of the body of at least 1.25, whereby on thermoforming at said draw ratio substantially uniform reflectivity over substantially the entire range of the visible spectrum for said body is maintained, characterised in that said gradient of optical layer repeat unit thicknesses is a quartic function.

A substantial majority of the individual layers of the body have optical thicknesses in the range where the sum of the optical thicknesses in a repeat unit of the polymeric materials is greater than 190 nm, and the first and second polymeric materials differ from each other in refractive index by at least 0.03. In a typical two component body, the polymeric materials will have the repeat unit AB, where A and B represent the different polymers. For three or more component bodies, other repeating units are possible such as for example ABCB or ABCABC. For a preferred two component body, with an AB repeat unit, a preferred ratio of optical thicknesses between the A and B components in the repeat unit is 2:1.

The layers in the polymeric body have a gradient of optical layer repeat unit thicknesses spanning a range of repeat unit thicknesses of at least 190 nm to 340 nm times a predetermined draw ratio of at least 1.25 while maintaining substantially uniform reflectivity over substantially the entire range of the visible spectrum for the body. By "optical layer repeat unit", we mean the number of layers of polymeric materials which make up a regular, recurring pattern in the multilayer body. For example, as discussed above, for a typical two component body the polymeric materials will have a repeat unit AB, where A and B represent the different polymers. Such a repeat unit, AB, will have an optical layer thickness of N_{A}d_{A} + N_{B}d_{B}, where N_{A} and N_{B} are the refractive indices of the polymers and d_{A} and d_{B} are the actual layer thicknesses of the polymers.

By "draw ratio" we mean the ratio of the initial to final thickness of the body. This ratio may be readily determined for specific shapes into which the body is formed. Draw ratios of 1.25:1 or greater are commonly encountered in thermoforming operations. In a preferred embodiment, the optical layer repeat units have a gradient such that the wavelengths of the first order reflections from the thinnest and thickest of the layers in a repeat unit differ by a factor of at least two.

By a gradient of optical layer repeat unit thicknesses, we mean a change in the thickness of the optical layer repeat units across the thickness of the body so that there is a difference in the optical repeat unit thickness between the thinnest and thickest optical repeat units in the multilayer stack. The gradient of optical layer repeat unit thicknesses in the practice of the present invention is a gradient of greater than two, meaning that the thickest optical layer repeat unit in the stack is at least twice as thick as the thinnest optical layer repeat unit. According to the invention, the gradient of optical layer repeat unit thicknesses is a quartic function, preferably a quartic function superimposed on a linear gradient.

In one embodiment of the invention, a substantial majority of the individual layers of the body have optical thicknesses in the range where the sum of the optical thicknesses in a repeating unit of the polymeric materials is between 190 nm and 1700 nm. Alternatively, the body initially may have a substantial majority of the individual layers with optical thicknesses in the range where the sum of the optical thicknesses in a repeating unit of the polymeric materials is greater than 1700 nm. For this alternative embodiment, the reflectance of the body will increase upon the thinning of the initially optically thick layers into the optically thin range.

In some embodiments of the invention it may be desirable to incorporate coloring agents such as dyes or pigments into one or more of the individual layers of the polymeric body. This can be done to one or both of the outer or skin layers of the body, or alternatively, the coloring agent may be incorporated into one or more interior layers in the body. The coloring agents may be selected to give the polymeric body a metallic appearance other than its normal silvery appearance such as bronze, copper, or gold, for example.

Different colors such as black, blue, red, yellow, and white may also be used. Typically, it is most desirable to use pigmented coloring agents in the interior layers to provide opaqueness and a two-sided mirror-like reflective quality and to use dyes on exterior surface layers. Coloring agents may be used in combination to provide desirable coloring and optical properties. For example, a pigmented white coloring agent may be used in an interior surface while a colored dye, such as blue, yellow, red, or green may be included on one or more surface layers to provide a unique reflective colored effect. Thermochromic pigments or dyes may be used to produce a color change as the temperature of the body changes. Additionally, coloring agents, gradient of optical layer repeat unit thicknesses, or a combination of the two may be used so that the reflection from the body simulates that of daylight.

Further, while the normal surface of the body is smooth to give a highly reflective silver appearance, in some instances it may be desirable to give the surface of the body a roughened or brushed appearance to simulate a brushed metallic appearance. Further, a solvent may be used to etch the surface of the multilayer body to provide a matte or pewter look to the body. Additionally, the body may be embossed with a variety of patterns to provide desirable optical effects.

In some embodiments of the invention, a third polymer layer may be placed in the multilayer body as a barrier layer or toughening layer. When the third polymer layer is a barrier layer, it may be present as a single layer on one or both exterior surfaces of the body or as an interior layer. For example, suitable barrier layer materials such as hydrolyzed ethylene vinyl acetate, copolymers of polyvinylidene chloride, nitrile polymers, and nylons may be used in or on the multilayer body. Suitable adhesive materials such as maleic anhydride grafted polyolefins may be used to bond such barrier layer materials to the multilayer body.

Alternatively, or in addition, a third polymer layer may be found as a surface or skin layer on one or both major exterior surfaces for an ABABAB repeating body or as an interior layer. The skin layer may be sacrificial, or may be permanent and serve as scratch resistant or weatherable protective layer. Further, such skin layers may be post applied to the body after coextrusion. For example, a skin layer may be applied as a sprayed on coating which would act to level the surface of the body to improve optical properties and impart scratch resistance, chemical resistance and/or weatherability. The skin layer may also be laminated to the multilayered body. Lamination is desirable for those polymers which are not readily coextrudable.

In yet another embodiment of the invention, a thermoformable polymeric multilayer variably reflective sheet is provided which possesses a varying reflectance across the surface of the sheet. That is, the measured reflectance of the sheet changes from one side to the other. The sheet includes at least first and second diverse polymeric materials which comprise a sufficient number of alternating layers such that at least a portion of visible light incident on the sheet is reflected. A substantial majority of the individual layers of the sheet have optical thicknesses in the range where the sum of the optical thicknesses in a repeating unit of said polymeric materials is greater than 190 nm, and the first and second polymeric materials differ from each other in refractive index by at least 0.03.

The individual layers vary in thickness across the sheet and the layers have a gradient of optical layer repeat unit thicknesses such that the wavelengths of first order reflections from the thinnest and thickest of the optical layer repeat units differ by a factor of at least two. This provides a sheet in which the amount of light transmitted and reflected by the sheet may be controlled. That is, since transmission, T, equals 1 - R - A, where R is reflection and A is absorption, a balance of transmission and reflective properties for the bodies may be achieved based on the desired use. For the great majority of the polymers useful in the practice of this invention, absorption of visible light is low.

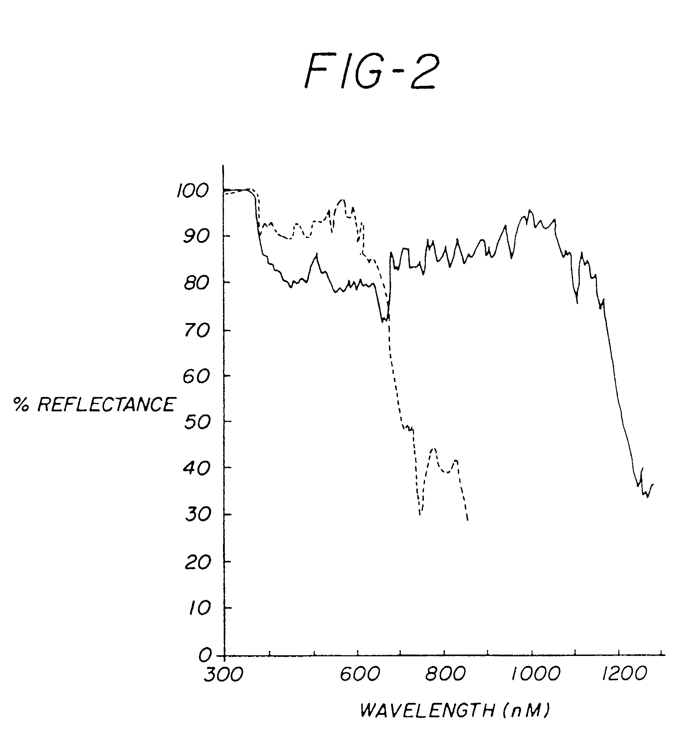

In another embodiment of the invention, the polymeric materials in the body are elastomers. Through the use of elastomers, the body may become variably reflective in a different sense. By selective stretching of a multilayer elastomeric body, the body may be made to exhibit changes in its overall reflectivity in a colorless fashion. That is, for example, where a majority of the layers are initially in the optically thick region, stretching of the elastomeric body will thin a substantial number of the layers into the optically thin range, with a consequent increase in the overall reflectivity of the body. For example, as shown in Fig. 2, a polymeric film of the present invention when thinned exhibited a higher reflectance (92 percent versus 81 percent for visible wavelengths). If elastomers were used, the effect could be made to be reversible.

The multilayer reflective polymeric bodies of the present invention may be formed into a number of decorative and/or structural parts. The bodies may be formed by coextrusion techniques initially into sheets which may then be post formed. Such post forming operations may include thermoforming, vacuum forming, or pressure forming. Further, through the use of forming dies, the multilayer reflective body may be initially formed into a variety of useful shapes including profiles, tubes, parisons which can then be formed into blow-molded containers, lighting fixture, globes and reflectors.

In another aspect of the invention, there is provided a birefringent light polarizer which reflects light anisotropically, comprising at least first and second diverse polymeric materials (A,B) differing from each other in refractive index by at least 0.03, said polarizer comprising a sufficient number of alternating layers (12,14) of said first and second polymeric materials (A,B) such that at least 50 percent of visible light in the plane of polarization is reflected, a substantial majority of the individual layers of said polarizer having optical thicknesses such that the sum of the optical thicknesses of the layer in a repeat unit of said alternating layers is greater than 190 nm, wherein the polarizer has a gradient of optical layer repeat unit thicknesses spanning a range of optical layer repeating unit thicknesses of at least 190 nm to a value of 340 nm times a predetermined draw ratio of the initial to final thickness of the body of at least 1.25, characterised in that said gradient of optical layer repeat unit thicknesses is a quartic function.

Accordingly, it is an object of the present invention to provide a formable multilayer reflective polymeric body which has substantially uniform reflectivity over substantially the entire range of the visible spectrum. It is a further object to provide a reflective polymeric body which may be thermoformed and drawn without affecting its substantially uniform reflectivity. It is a further object to provide a reflective polymeric body which may be made to be variably reflective. These, and other objects and advantages of the present invention will become apparent from the following detailed description, the accompanying drawings, and the appended claims.
Fig. 1 is a schematic cross-section of a two component multilayer polymeric reflective body not covered by the present invention, where the first polymer, A, has a refractive index, n₁, and the second polymer, B, has a refractive index, n₂;
Fig. 2 is a graph of reflectance versus wavelength for a 2625 layer two-component film of the present invention;
Figs. 3a, 3b, and 3c are calculated graphs of reflectance versus wavelength for 2496, 3774, and 4992 layer two-component film of the present invention, respectively;
Figs. 4-8 are graphs of reflectance versus wavelength for five samples taken from Alfrey et al., US-A-3,711,176;
Fig. 9 is a calculated graph of reflectance versus wavelength for the film of Fig. 8, thinned by 20 percent;
Fig. 10 is a calculated graph of reflectance versus wavelength for the fifth sample of Alfrey et al., with the axis of wavelength extended to 2300 nm;
Fig. 11 is a calculated graph of reflectance versus wavelength for the film of Fig. 10, thinned by one-half;
Fig. 12 is a calculated spectrum for a 5000 layer film not covered by the present invention which has a gradient of optical repeat unit thicknesses designed to span wavelengths from 380 to 2000 nm;
Fig. 13 is a calculated spectrum for the film of Fig. 12, thinned by one-half; and
Fig. 14 is a schematic cross section of a two component multilayer reflective body in which the individual layers vary in thickness across the body.

The present invention provides a formable multilayer reflective polymeric body which has substantially uniform reflectivity over substantially the entire range of the visible spectrum. The all-polymeric body may also be thermoformed and drawn into a number of useful articles without affecting its substantially uniform reflectivity. To obtain the substantially uniform colorless reflectivity, the multilayer body has a gradient of optical layer repeat unit thicknesses which extends beyond that which is needed to reflect visible light, with the magnitude of the gradient of optical layer repeat unit thicknesses being sufficient to permit high draw ratios during forming. In one embodiment, the large majority of optical thicknesses in a repeating unit in the body preferably have a sum of optical thicknesses of between 190 nm to 1700 nm. However, the invention encompasses gradient of optical layer repeat unit thicknesses up to 3400 nm and beyond.

The optical theory of multiple reflections from optically thin layers having differing refractive indices demonstrates the dependency of the effect on both individual layer thickness and refractive index of the material. See, Radford et al., "Reflectivity of Iridescent Coextruded Multilayered Plastic Films", Polymer Engineering and Science 13, 3, pg. 216 (1973). The primary or first order reflected wavelength for a two component multilayer film for normal incidence is given by the equation below.${\text{λ}}_{\text{I}} \text{= 2(} {\text{N}}_{\text{1}} {\text{d}}_{\text{1}} \text{+} {\text{N}}_{\text{2}} {\text{d}}_{\text{2}} \text{)}$ where, λ_{I} is the wavelength of first order reflection in nanometers. Visible light spans the range of 380-680 nm. *N*_{*1*} and *N*_{*2*} are the refractive indices of the two polymers, and *d*_{*1*} and *d*_{*2*} are the layer thicknesses of the two polymers, also in nanometers. For a three or more component film, the above equation may be generalized to: 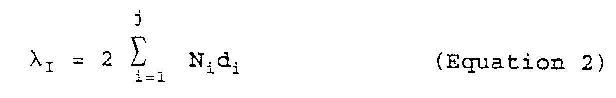 where λ_{I}, N, and d are as defined above and j is an integer greater than 1.

As can be seen for a two component system, the first order reflected wavelength is proportional to the sum of the optical thicknesses of the two polymers (where optical thickness, *N*_{*i*}*d*_{*i*}, is the product of layer thickness times refractive index). In addition to first order reflections, higher order reflections occur at integer fractions of the first order. The relative intensity of these higher order reflections depends on the ratio of the optical thickness of the polymer components and the number of layers.

Thus, for a selected system, changing the physical thickness of the individual layers has a direct effect on the reflected wavelength from those layers. One major area where multilayer reflective polymeric bodies may find use is in reflective articles which are produced by thermoforming. As a result of thermoforming of a polymeric sheet or film, the individual layers in a multilayer structure are thinned proportionately to the part thickness. Depending upon the particular thermoforming operation and pattern, the individual layers may be thinned more in some locations than others. For example, if a flat sheet were to be thermoformed into a container, the greatest amount of layer thinning may occur in the area where the sharpest angles or contours were formed, for example in the bottom corner of the container.

When individual layers are thinned, wavelengths of light reflected from such layers are shifted to lower wavelengths in accordance with the equations set forth above. To prevent the appearance of colors and iridescence, the multilayer polymeric bodies of the present invention are preferably designed to reflect substantially all wavelengths from the visible (380 to 680 nm) through the near infrared (680 to 3400 nm) (neglecting absorption of some wavelengths in the infrared by certain polymers). Thus, when the individual layers of the bodies of the present invention are thinned, as during a thermoforming operation, the bodies maintain their substantially uniform reflectivity as the layers which originally reflected in the infrared range are thinned to reflect in the visible range. Layers which may have originally reflected in the visible range are thinned so that they either reflect at lower visible wavelengths or become transparent, reflecting in the ultraviolet range.

To produce a body which reflects a broad bandwidth of wavelengths in the range of from 380 to 680 nm (that is, the visible range), the body must have a gradient of optical layer repeat unit thicknesses sufficient to reflect substantially the entire range of visible light up to some predetermined maximum draw ratio (MDR). Thus, rearranging Equation 3 and$\text{MDR =} \frac{{\text{t}}_{\text{i}}}{{\text{t}}_{\text{f}}} \text{≈} \frac{{\text{(λ}}_{\text{I}} {\text{)}}_{\text{max}}}{\text{680}}$ substituting for λ_{I} yields, 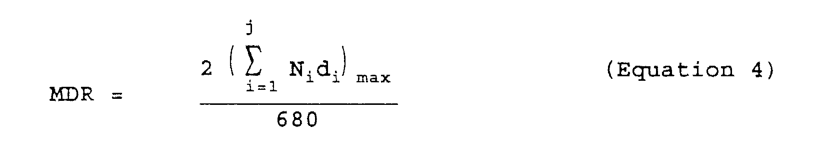 where: MDR is the maximum draw ratio; tᵢ is the initial thickness of the optically active layers in the multilayer stack (that is, microlayer core), excluding protective skin layers, protective boundary layers, and other optically inactive layers such as dyed or pigmented layers; t_{f} is the final thickness of the layers in the microlayer core in the thermoformed part at MDR; (λ_{I})ₘₐₓ is the maximum reflecting wavelength in the body (ignoring absorption) in nanometers; the summation from i=1 to j of *(N*_{*i*}*d*_{*i*}*)*ₘₐₓ is the maximum optical repeat unit thickness in the body in nanometers; *N*_{*i*} is the refractive index of the i^{th} layer in the repeat unit; *d*_{*i*} is the physical layer thickness of the i^{th} layer in the repeat unit; and the constant 680 nm is the upper wavelength limit of visible light.

Equation 3 may be rewritten to calculate the upper limit of reflected wavelength required in a multilayer body for a specified MDR as follows:${\text{(λ}}_{\text{I}} {\text{)}}_{\text{max}} \text{= (680) MDR}$ The corresponding minimum optical repeat unit thickness in the body is then: 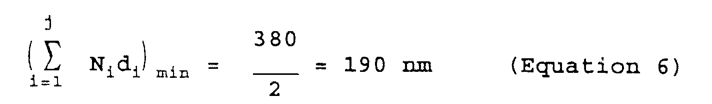 The minimum, or lower limit, of reflected wavelength in the sheet is 380 nm (lowest visible wavelength) and the maximum optical repeat unit thickness is:

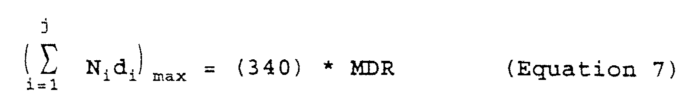

Therefore, the multilayer body for a specified maximum draw ratio requires a gradient of optical repeat unit thicknesses spanning 190 nm to (340) *MDR nm. Thus, for an MDR of five, a gradient spanning 190 to 1700 nm is required. These upper and lower limits apply irrespective of optical thickness ratio or number of layers in the optical layer repeat unit.

For a given thermoforming operation, the maximum draw ratio will depend on the geometry of the part to be formed, for example, the part height, width, or diameter, sharpness of corners. Material distribution in the part can also be affected by the plug design when plug assisted thermoforming is used, prebillowing of the sheet, location of the pattern clamp, and various other techniques which have been developed in the art of thermoforming.

With MDR and the desired reflectivity for a multilayer part specified, the multilayer sheet structure design can be completed. Polymers, and their respective refractive indices, which are useful in the practice of the present invention include all of the polymers listed in the afore-mentioned US-A-5,122,905 and US-A-5,122,906.

US-A-5,122,905 describes those listed suitable thermoplastic resins, along with representative refractive indices, which may be used in the practice of the present invention include, but are not limited to: perfluoroalkoxy resins (refractive index = 1.35), polytetrafluoroethylene (1.35), fluorinated ethylene-propylene copolymers (1.34), silicone resins (1.41), polyvinylidene fluoride (1.42), polychlorotrifluoroethylene (1.42), epoxy resins (1.45), poly(butyl acrylate) (1.46), poly(4-methylpentene-1) (1.46), poly(vinyl acetate)(1.47), ethyl cellulose (1.47), polyformaldehyde (1.48), polyisobutyl methacrylate (1.48), polymethyl acrylate (1.48), polypropyl methacrylate (1.48), polyethyl methacrylate (1.48), polyether block amide (1.49), polymethyl methacrylate (1.49), cellulose acetate (1.49), cellulose propionate (1.49), cellulose acetate butyrate (1.49), cellulose nitrate (1.49), polyvinyl butyral (1.49), polypropylene (1.49), polybutylene (1.50), ionomeric resins such as Surlyn (trademark) (1.51), low density polyethylene (1.51), polyacrylonitrile (1.51), polyisobutylene (1.51), thermoplastic polyesters such as Ecdel (trademark) (1.52), natural rubber (1.52), perbunan (1.52), polybutadiene (1.52), nylon (1.53), polyacrylic imides (1.53), poly(vinyl chloro acetate) (1.54), polyvinyl chloride (1.54), high density polyethylene (1.54), copolymers of methyl methacrylate and styrene such as Zerlon (trademark) (1.54), transparent acrylonitrile-butadiene-styrene terpolymer (1.54), allyl diglycol resin (1.55), blends of polyvinylidene chloride and polyvinyl chloride such as Saran resins (trademark) (1.55), polyalpha-methyl styrene (1.56), styrene-butadiene latexes such as Dow 512-K (trademark) (1.56), polyurethane (1.56), neoprene (1.56), copolymers of styrene and acrylonitrile such as Tyril resin (trademark) (1.57), copolymers of styrene and butadiene (1.57), polycarbonate (1.59), other thermoplastic polyesters such as polyethylene terephthalate and polyethylene terephthalate glycol (1.60), polystyrene (1.60), polyimide (1.61), polyvinylidene chloride (1.61), polydichlorostyrene (1.62), polysulfone (1.63), polyether sulfone (1.65), and polyetherimide (1.66). The refractive indices reported above may vary somewhat at different wavelengths. For example, the refractive index of polycarbonate is somewhat greater for light in the blue region of the spectrum and somewhat lower for light in the red region of the spectrum. Copolymers of the above resins are also useful such as ethylene and vinyl alcohol, styrene and hydroxy ethylacrylate, styrene and maleic anhydride, styrene-butadiene block copolymers, styrene and methylmethacrylate, and styrene and acrylic acid. Other useful polymeric materials include polyetheretherketones, polybutene, maleic anhydride grafted polyolefins such as Admer (available from Mitsui Chemicals) and Plexar (available from Quantum Chemicals), and copolymers of ethylene and vinyl acetate such as CXA (available from du Pont). The latter three polymers are particularly useful as adhesive layers to bond other polymeric layers together in the multilayer construction. A condition for the selection of the polymers to make up the alternating layers of the body is that the polymers selected have refractive indices which differ from each other by at least 0.03. Further, the polymers should be compatible in processing temperatures so that they may be readily coextruded. Reflectivity is determined by the refractive indices of the polymers and the number of optically active layers in the sheet. Multilayer sheets having only a few hundred layers can produce reflectivities of at least 40 percent. For greater reflectivities of 90 percent and above, the number of layers is generally increased to 1000 or more layers.

The gradient of optical layer repeat unit thicknesses may be introduced across the thickness of the sheet. The gradient of optical layer repeat unit thicknesses is introduced by a quartic function. We have found that for a two component multilayer body, the optimum optical thickness ratio (that is, the ratio of the optical thickness of the polymeric components) is 2:1, yielding an "f-ratio" of 1/3, where f-ratio is defined as: 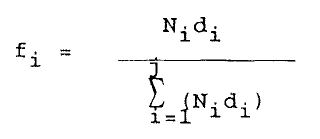 and *N*_{*i*}, *d*_{*i*}, and j are as previously defined. Other optical thickness ratios may be used effectively. However, we have found that the 2:1 ratio activates second order reflectance as well as first order reflectance to enhance the overall reflectivity of the body.

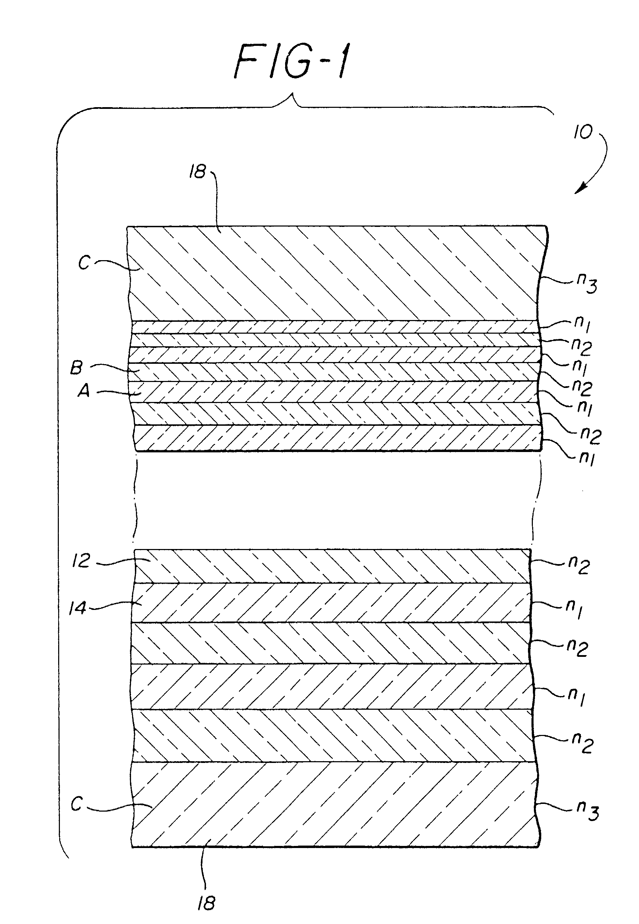

Fig. 1 (an exemplary embodiment not covered by the present invention) schematically illustrates a two-component reflective film 10 having a repeating unit AB in accordance with the present invention. The film 10 includes alternating layers of first polymer 12 having a refractive index, n₁, and a second polymer 14 having a refractive index, n₂. Fig. 1 shows a preferred form of the invention where substantially all of the layers of the film have optical thicknesses where the sum of the optical thicknesses of the repeat unit is greater than 190 nm. Fig. 1 also depicts a linear gradient of optical layer repeat unit thicknesses for the film.

Skin layers of a polymer (C) 18 which can have a refractive index n₃ are shown positioned on both major exterior surfaces of the reflective body to protect the other layers from scratches or weathering or to provide support for the other layers. The polymer C may be the same or different for each exterior surface and may, in some cases, be the same as the A or B polymer components. Likewise, n₃ may be different from or the same as the refractive index for either of the A or B polymers.

The skin layers may make up as much as 20 percent of the total thickness of the film and are optically inactive. The skin layer polymers are chosen for their transparency, compatibility with the A and B polymer components of the multilayer body, and durability, scratch resistance, and/or weatherability.

Preferably, the polymers chosen have a refractive index mismatch of at least 0.03 at the visible wavelengths 380 to 680 nm. Typically, refractive indices of materials, including polymers, are measured at a convenient wavelength in the visible range such as 589 nm sodium vapor. Examples of suitable thermoplastic polymeric resins which may be used in the practice of the present invention are contained in Wheatley et al., US-A-5,126,880. Wheatley et al. describes a suitable thermoplastic resins along with representative refractive indices, which may be used in the practice of the present invention include, but are not limited to: copolycarbonates of bisphenol and thiodiphenol (refractive index = 1.59 to 1.64), blends of polymethyl methacrylate and vinylidene fluoride (1.42 to 1.49), bisphenol A polycarbonate (1.59), copolymers of methyl methacrylate and vinylidene fluoride, polymethyl acrylate (1.48), polymethyl methacrylate (1.49), blends and copolymers of polymethyl methacrylate and polyvinylidene fluoride; copolymers of vinylidene fluoride and other halogenated monomers such as chlorofluoroethylene, chlorodifluoroethylene, chlorotrifluoroethylene, chlorotrifluoroethylene, hexafluoroacetone, hexafluoropropylene, hexafluoropropene, pentafluoropropylene, trifluoroethylene, tetrafluoroethylene, and vinyl fluoride blended with polymethyl methacrylate; blends of polyvinylidene fluoride and poly(vinyl acetate); copolymers of methyl methacrylate, vinylidene fluoride, and a monomer selected from chlorofluoroethylene, chlorodifluoroethylene, chlorotrifluoroethylene, chlorotrifluoroethylene, hexafluoroacetone, hexafluoropropylene, hexafluoropropene, pentafluoropropylene, trifluoroethylene, tetrafluoroethylene, and vinyl fluoride blended with polymethyl methacrylate; and blends of polyvinylidene fluoride and poly(vinyl acetate). The refractive indices reported above may vary somewhat at different wavelengths. For example, the refractive index of polycarbonate is somewhat greater for light in the blue region of the spectrum and somewhat lower for light in the red region of the spectrum. Copolymers of the above resins are also useful such as ethylene and vinyl alcohol, styrene and hydroxy ethylacrylate, styrene and maleic anhydride, styrene-butadiene block copolymers, styrene and methyl methacrylate, and styrene and acrylic acid. Other useful polymeric materials include polyetheretherketones, polybutene, maleic anhydride grafted polyolefins such as Admer (available from Mitsui Chemicals) and Plexar (available from Quantum Chemicals), and copolymers of ethylene and vinyl acetate such as CXA (available from du Pont). The latter three polymers are particularly useful as adhesive layers to bond other polymeric layers together in the multilayer construction. A condition for the selection of the polymers to make up the layers of the body is that the polymers selected have refractive indices which differ from each other by at least 0.03. Further, the polymers should preferably be compatible in processing temperatures so that they may be readily coextruded.

It is preferred that the polymers selected have compatible rheologies for coextrusion. That is, as a preferred method of forming the multilayer films is the use of coextrusion techniques, the melt viscosities of the polymers must be reasonably matched to prevent layer instability or nonuniformity. The polymers used also should have sufficient interfacial adhesion so that the films will not delaminate. Alternatively, a third polymer may be used as an adhesive or glue layer to secure the first and second polymer layers together.

Multilayer bodies in accordance with the present invention are most advantageously prepared by employing a multilayered coextrusion device as described in US-A-3,773,882 and US-A-3,884,606. Protective boundary layers may be added to the multilayer bodies by an apparatus as described in US. Application Serial No. 07/955,788, filed October 2, 1992 (WO-A-94/07677), to Ramanathan et al. entitled, "Improved Control of Protective Boundary Layer". Ramanathan et al. describes a process for the coextrusion of a multilayer polymeric body providing at least a first stream and a second stream of heat plastified extrudable thermoplastic material, dividing each of the streams into a plurality of first substreams and a plurality of second substreams, respectively, combining the substreams to form a composite stream having said first substreams and second substreams interdigitated, providing a third stream of heat plastified thermoplastic material to the exterior surfaces of said composite stream to form protective boundary layers, said third stream of thermoplastic material having a viscosity which is equal to or less than that of either said first or second streams of thermoplastic material and is supplied at a volumetric flow rate which is from 1 to 12.5 percent of the total volume of said composite stream, forming a manipulated stream by mechanically manipulating said composite stream having said protective boundary layers to provide an increased number of layers, and shaping the manipulated stream into a multilayer polymeric body having a multiplicity of layers of said first and second thermoplastic materials, said layers being generally parallel to one another. Such coextrusion devices provide a method for preparing multilayered, simultaneously extruded thermoplastic materials, each of which are of a substantially uniform layer thickness. To increase the total number of layers in the multilayer body, preferably a series of layer multiplying means as are described in US-A-5,094,793 and US-A-5,094,788 may be employed. The layer multiplying means are termed interfacial surface generators, or ISG's. US-A-5,094,793 describes a method and apparatus for generating interfacial surfaces in a fluid mass which divides a first stream of the fluid mass into a plurality of branch streams, redirects or repositions the branch streams, expands and contracts the branch streams in a symmetrical fashion, and recombines the branch streams to form a second stream of the fluid mass; or divides a first stream of the fluid mass into a plurality of branch streams, redirects or repositions the branch streams, recombine the branch streams to form a second stream of the fluid mass, and expands and contracts the second stream in a symmetrical fashion. US-A-5,094,788 describes a method for making multilayer films having a prescribed distribution of the thicknesses of the layers of one or more materials from one major surface of the film to an opposing surface, by dividing a first composite stream comprised of discrete overlapping layers of the one or more materials, of which at least a pair of such layers define a generally planar layer interface therebetween which lies generally in an x-z plane of an x-y-z coordinate system, wherein the z-axis is taken as extending in the general direction of flow of the first composite stream, the x-axis extends transversely of the first composite stream and defines a transverse dimension of the layer interface, and the y-axis extends generally perpendicularly away from the planar layer interface in the thickness direction of the pair of discrete overlapping layers, into a plurality of branch streams along the x-axis, such that the pair of discrete overlapping layers and the generally planar layer interface defined therebetween are distributed among two or more of the branch streams; repositioning at least the two or more branch streams along both of the x-and y-axes as the branch streams flow along the x-axis; individually symmetrically expanding a transverse dimension of at least the two or more branch streams along the x-axis; individually symmetrically contracting the thickness of at least the two or more branch streams along the y-axis independently adjusting the flow rates of at least the two or more branch streams to which the pair of discrete overlapping layers and the generally planar layer interface therebetween were distributed; and recombining the plurality of branch streams in overlapping relationship to form a second composite stream having a greater number of discrete overlapping layers of the one or more materials than the first composite stream distributed generally in the prescribed distribution.

Gradients of optical layer repeat unit thicknesses may be introduced into the multilayer body by controlling the volume of heat plastified polymers passing through the feed ports of the co-extrusion device as taught in Schrenk, US-A-3,687,589. Schrenk teaches an apparatus for the simultaneous extrusion of at least two diverse synthetic resinous materials into a layered composite body, the apparatus having a first heat plastified synthetic resinous material supply means adapted to deliver a first heat plastified stream, a second heat plastified synthetic resinous material supply means adapted to deliver a second heat plastified stream, a means to divide the first stream and a means to divide the second stream into a plurality of substreams, each means having an entrance and an exit, a means to recombine the substreams in a desired relationship into a composite layered stream, a means to deform the composite layered stream into a desired configuration, a stream shearing means for selectively applying a shearing force, by continual mechanical motion of a surface of said stream shearing means in contact with a stream, with the stream shearing means being at least one movable body positioned adjacent to, and in spaced relationship to the entrance of a dividing means. Alternatively, the optical layer repeat units may be introduced upstream of the interfacial surface generators by the use of adjustable valves to control the amount of heat plastified polymer introduced at the various feed slots to the ISG's. In yet another alternative method for introducing a gradient of optical layer repeat unit thicknesses into the multilayer polymeric body, a temperature gradient may be imposed on the feedblock to the coextrusion device.

In operation, the feedblock of the coextrusion device receives streams of the diverse thermoplastic polymeric materials from a source such as a heat plastifying extruder. The streams of resinous materials are passed to a mechanical manipulating section within the feedblock. This section serves to rearrange the original streams into a multilayered stream having the number of layers desired in the final film. Optionally, this multilayered stream may be subsequently passed through a series of layer multiplying means (that is, ISG's) in order to further increase the number of layers in the final film.

The multilayered stream is then passed into an extrusion die which is so constructed and arranged that streamlined flow is maintained therein. Such an extrusion device is described in US-A-3,557,265 which teaches a method of preparing such a sheet of thermoplastic resinous material by providing by extruding in an extrusion apparatus a plurality of closely adjacent flowing streams of diverse thermoplastic materials in a heat plastified condition in contiguous relationship to each other, each stream having generally planar surfaces which are generally parallel; altering the cross-sectional configuration of the plurality of flowing streams by reducing the dimension of the stream in a direction generally perpendicular to interfaces between the individual streams and increasing the dimension of the stream in a direction transverse to the direction of flow and generally parallel to the interface of the stream to form a sheet-like configuration having a plurality of layers wherein the layer interfaces are in generally parallel relationship to each other and to major surfaces of the sheet-like configuration. The resultant product is extruded to form a multilayered film in which each layer is generally parallel to the major surface of adjacent layers.

The configuration of the extrusion die can vary and can be such as to reduce the thickness and dimensions of each of the layers. The precise degree of reduction in thickness of the layers delivered from the mechanical orienting section, the configuration of the die, and the amount of mechanical working of the film after extrusion are all factors which affect the thickness of the individual layers in the final film.

The feedblock of the coextrusion device is preferably designed to deliver an approximately linear optical layer repeat unit to the ISG's to achieve the substantially uniform broadband reflectance for the body. For up to eight layer multiplications, a gradient of thickest to thinnest layers from the feedblock should have a ratio of thickest to thinnest of at least 1.4, with a ratio of 4:1 being preferred. If a greater number of layer multiplications are used, the gradient ratio at the feedblock may be reduced. The feed blocks may be designed, as taught in the above-mentioned patents, to deliver overlapping layer thickness distributions which fit a quartic function. The overlapping thickness in the segments having linear gradients produces a redundancy in layers having substantially the same thickness. This redundancy is desirable as it compensates for any flaws or inconsistencies in the layers by placing groups of layers at different locations within the reflective body which reflect in the same wavelength region.

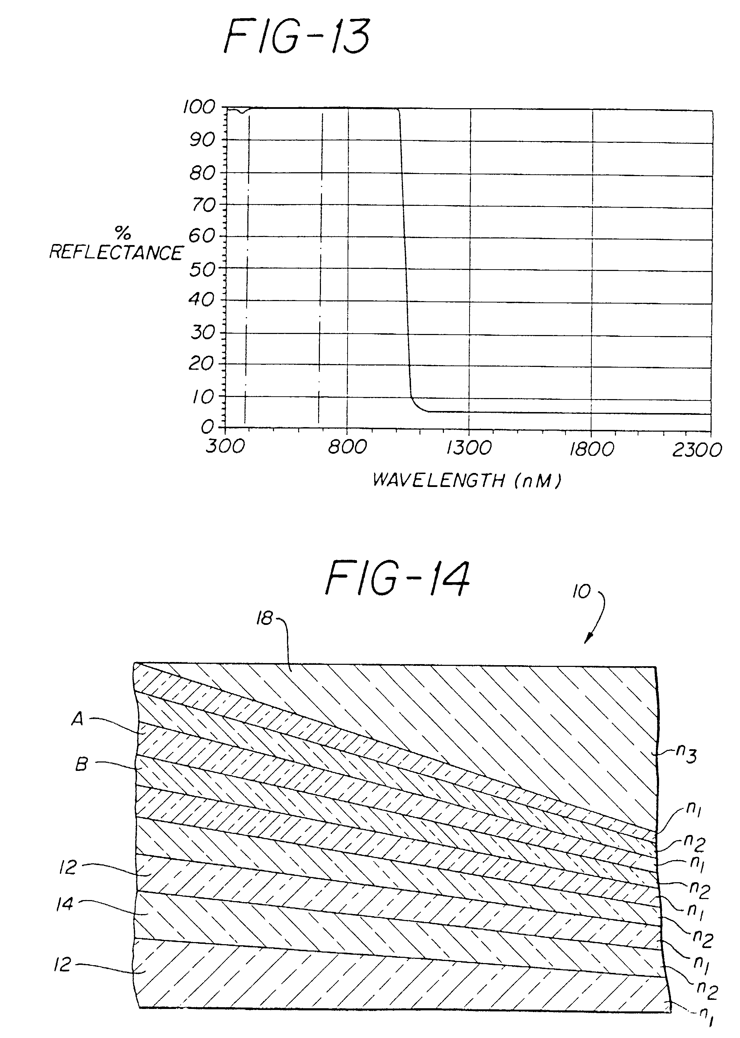

The feedblock of the coextrusion device may also be designed to deliver layers which taper in thickness from one side of the polymeric body to the other. Fig. 14 illustrates schematically this embodiment of the invention in which alternating layers of first and second polymers 12 and 14, respectively, taper linearly across the surface of film 10. Skin layer 18 is supplied using a shaped skin feed slot to provide film 10 with a uniform overall thickness.

The embodiment shown in Fig. 14 provides a variably reflective sheet which possesses a varying reflectance across the surface of the sheet. That is, the measured reflectance of the sheet changes from one side to the other. The sheet includes at least first and second diverse polymeric materials which comprise a sufficient number of alternating layers such that at least a portion of visible light incident on the sheet is reflected. A substantial majority of the individual layers of the sheet have optical thicknesses in the range where the sum of the optical thicknesses in a repeating unit of said polymeric materials is greater than 190 nm, and the first and second polymeric materials differ from each other in refractive index by at least 0.03.

In order that the invention may be more readily understood, reference is made to the following examples, which are intended to be illustrative of the invention, but are not intended to be limiting in scope.

Employing an apparatus as generally described in US-A-3,773,882 and US-A-3,759,647, a 2625 alternating layer reflective film was produced. The film was approximately 0.021 inches (0.53 mm) in thickness and had 2625 alternating layers (AB) of polycarbonate (CALIBRE 300-22, trademark of The Dow Chemical Company) and polymethyl methacrylate (Cyro Acrylite H15-003, trademark of Cyro Industries). The sum of the optical thicknesses in the AB repeating unit was at least 190 nm. The refractive index of the polycarbonate (PC) was 1.586, while the refractive index of the polymethyl methacrylate (PMMA) was 1.49.

A gradient of optical layer repeat unit thicknesses (thickest to thinnest optical layer repeat unit) of 2.76:1 was introduced into the multilayer film by controlling the temperature in the feedblock to achieve a differential of 50°F (28°C). As shown by the solid line in Fig. 2, the film has 81 percent reflectance at visible wavelengths (380 to 680 nm).

A second film sample was prepared identical to the first sample and then was drawn down to a thickness of 0.012 inches (0.30 mm) . This produced a thickness reduction of 1.75:1 and simulated thermoforming conditions. As can been seen from the dashed line in Fig. 2, the overall reflectance in the visible range increased to 92 percent.

To demonstrate the visible reflecting capabilities of the film of the present invention, a computer simulation was run to predict the reflectance characteristics of two component polymethyl methacrylate/polycarbonate multilayer films having 2496, 3744, and 4992 layers, respectively. The simulation used a software program entitled "Macleod Thin Film Optics" available from Kidger Optics, Sussex, England. The sum of the optical thicknesses of the layers in the AB repeat unit of the film were assumed to be in the range of from 190 to at least 1700 nm. A refractive index mismatch of 0.1 was assumed based on the actual mismatch of the two polymers when measured at visible wavelengths.

The 2496 layer film was assumed to have been produced using a four channel variable vane ISG layer multiplier design as taught in the afore-mentioned US-A-5,094,793 to divide an incoming 624 layer segment into four segments and stacking the segments on top of each other in thickness ratios of 0.301/0.279/0.232/0.188. The ratio of stack thicknesses may be controlled by controlling vane position; it was assumed in this example that a 4:1 optical layer repeat unit was delivered from the feedblock. The 3744 and 4992 layer films were assumed to be produced using a two channel variable vane ISG followed by either a three or four channel variable vane ISG.

The 2496 layer film had a thickness of 0.89 mm, including 20 percent of that thickness for skin and protective boundary layers. The 3744 layer film had a thickness of 1.58 mm, and the 4992 layer film had a thickness of 1.40 mm, respectively, with the same 20 percent of thickness taken up by skin and protective boundary layers. The 3744 layer film was assumed to have a 3.5:1 feedblock gradient and was divided using a two segment ISG into layer segments having thickness ratios of 0.576/0.424. The layer segments were stacked and then further divided by a three segment ISG into layer segments having a 0.368/0.332/0.300 thickness ratio. The 4992 layer film had a 3.5:1 feedblock gradient, and the layer segment were stacked with a 0.54/0.46 split from a two segment ISG followed by a 0.300/0.285/0.220/0.195 split from a variable four segment ISG.

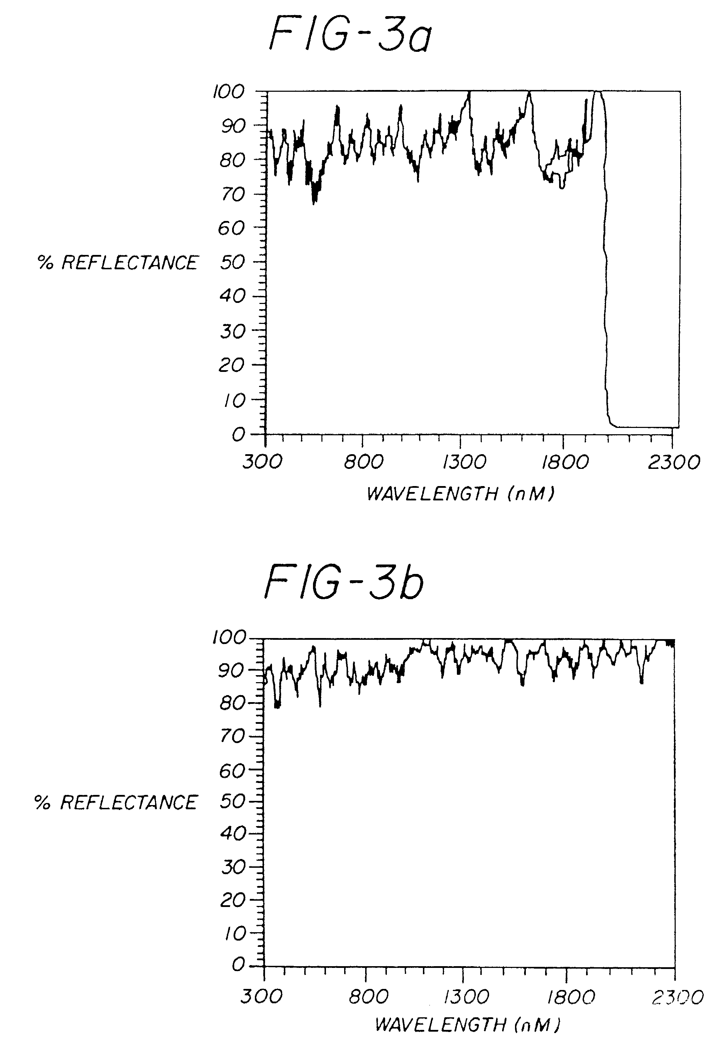

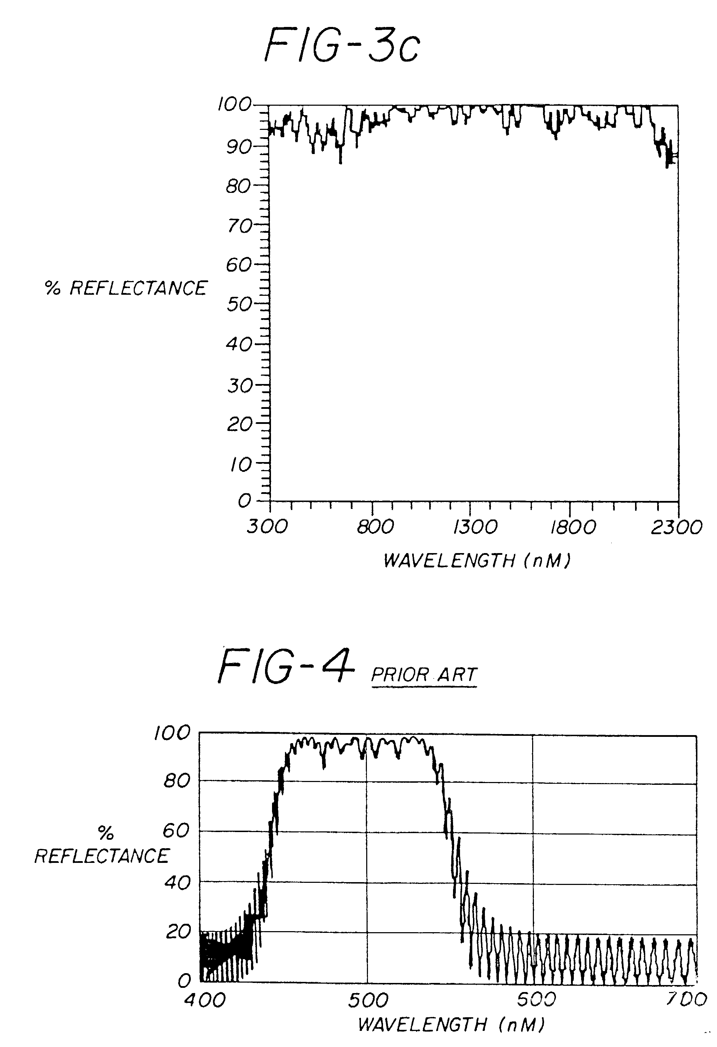

As can be seen from Figs. 3(a)-3(c), the 2496 layer design produced an average reflectance in the visible range of greater than 80 percent, the 3744 layer design produced an average reflectance in the visible range of greater than 85 percent with no wavelength below 80 percent, and the 4992 layer design produced an average reflectance in the visible range of 95 percent with no wavelength below 85 percent.

For purposes of thinning the film for thermoforming, the minimum part thickness can be calculated using the following equation:${\text{t}}_{\text{min}} \text{=} \frac{{\text{}}^{\text{t}} \text{init *680}}{{\text{(λ}}_{\text{I}} {\text{)}}_{\text{max}}}$ Thus, for the 4992 layer film having an initial thickness of 1.4 mm and which reflects to 2300 nm, a part may be thermoformed to a 1.4*680/2300 = 0.41 mm wall thickness before uniformity of reflectance over the visible range is lost and the onset of iridescent color is observed.

By way of comparison, an optically thick two component film having 2625 layers and a refractive index mismatch between polymers of 0.1 made in accordance with the teachings of Wheatley et al., US-A-5,122,905, would be initially 3.2 mm thick. It could be formed into a part 1.5 mm thick before the onset of iridescent color while having a reflectivity of 75 percent. Thus, it can be seen that the multilayer film of the present invention can be formed into much thinner parts having a higher overall reflectivity.

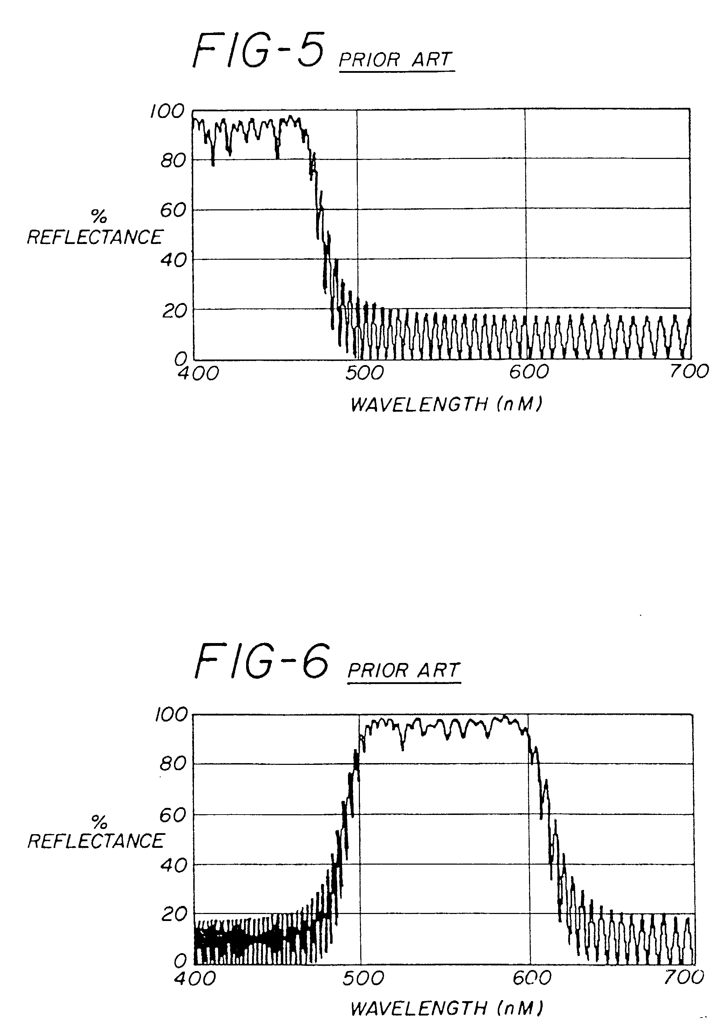

Computer simulations were prepared from the Macleod software to compare the spectra of samples reported in Alfrey et al., US-A-3,711,176, before and after drawing to thin the layers to demonstrate that Alfrey et al. do not teach a formable multilayer film which possesses substantially uniform reflectance over the visible range of the spectrum. Figs. 4-8 are calculated spectra for the examples reported by Alfrey et al. at column 5, lines 20-65 of the patent.

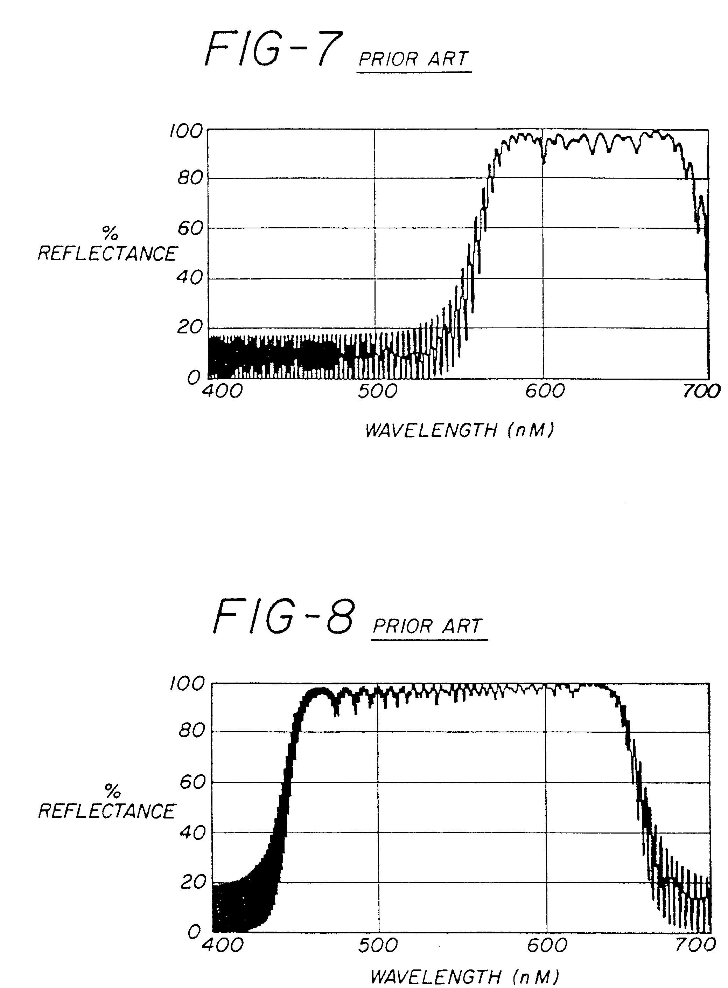

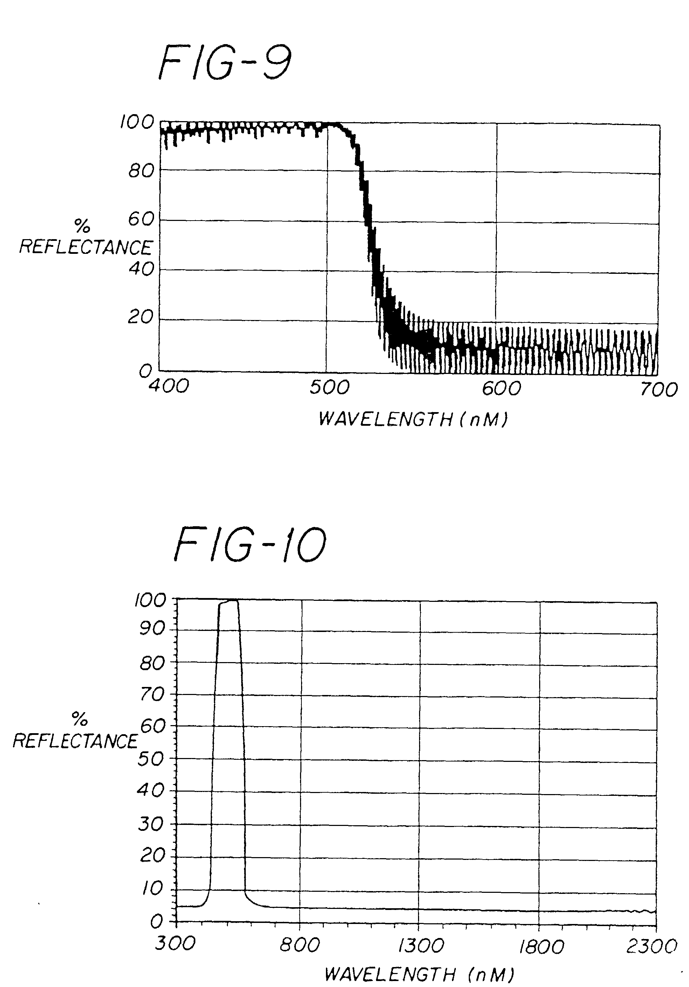

The examples illustrated in Figs. 1-4 of Alfrey et al. show nonuniform reflectance over the visible range. Likewise, the spectra for Figs 4-8, showing the Alfrey examples, demonstrate that the examples produce nonuniform colored reflectances only over a portion of the visible range. The example shown in Fig. 8, a 500 layer sample with a linear optical layer repeat unit, show the greatest bandwidth having a high degree of reflectance (from 450 to 650 nm) but still has a green metallic appearance and clearly does not span substantially the entire visible spectrum of 380 to 680 nm. Moreover, thinning such a film only 20 percent (that is, a 1.25:1 draw ratio or thinning factor) greatly shifts the spectrum and changes the color (to blue) of the film as shown by Fig. 9.

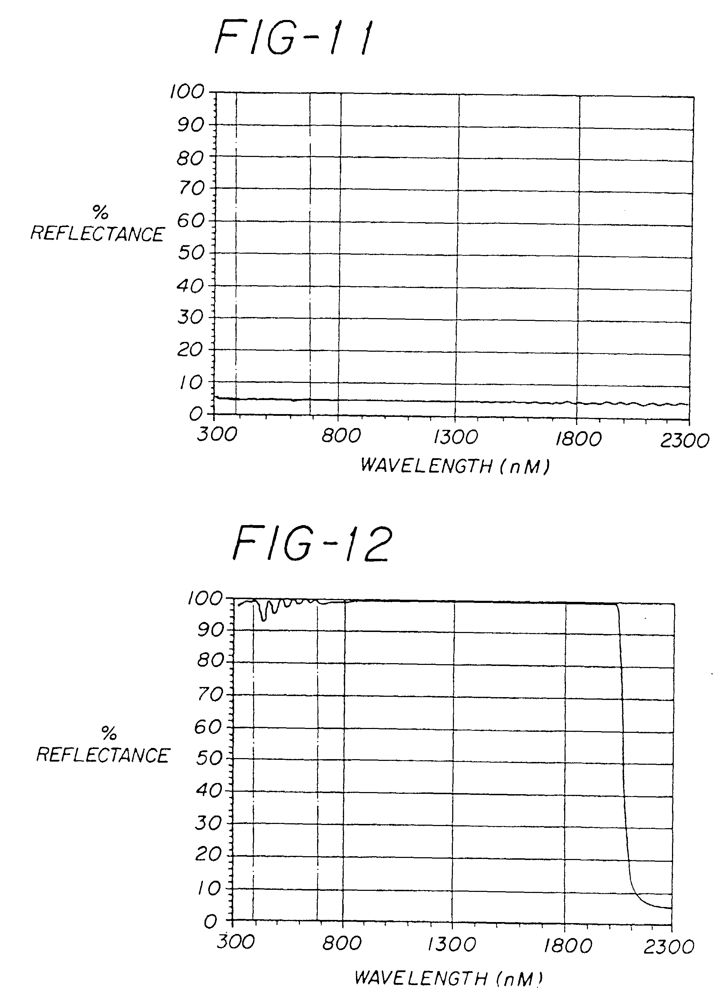

To demonstrate the unique capabilities and features of the present invention to maintain substantially uniform reflectivity over substantially the entire range of the visible spectrum, a film in accordance with the present invention was simulated using the Macleod software program described in Example 2 and then compared against the fifth sample of Alfrey et al. (see column 5, lines 61-64). Fig. 10 show the percentage reflectance of the fifth sample of Alfrey plotted against wavelength to 2300 nm. As can be seen, the film is reflective only over a portion of the visible spectrum and is substantially transparent to infrared wavelengths. Fig. 11 illustrates a computer simulation, also using the Macleod software, of the effect of thinning the Alfrey et al. film to one-half its original thickness (that is, a 2:1 draw). Reflectivity of the film drops to approximately 5 percent for all wavelengths, and the film becomes transparent.

Fig. 12 (an exemplary embodiment not covered by the present invention) illustrates the calculated spectrum for a 5000 layer film of the present invention (alternating layers AB of polycarbonate and polymethyl methacrylate having a refractive index mismatch of 0.1) which has a linear thickness gradient designed to span wavelengths from 380 to 2000 nm and which is 1.5 mm thick. Reflectance of the film in both the visible and infrared portion of the spectrum is uniform and high, varying between 93 and 100 percent. Fig. 13 illustrates the calculated spectrum for the film of Fig. 12 after thinning to one-half its original thickness (2:1 draw to 0.75 mm thickness). Reflectivity remains both high and uniform over the entire visible spectrum. The film could be further thinned to a thickness of only about 0.58 mm before the onset of iridescent color.

While certain representative embodiments and details have been shown for purposes of illustrating the invention, it will be apparent to those skilled in the art that various changes in the methods and apparatus disclosed herein may be made without departing from the scope of the invention, which is defined in the appended claims.

## Claims

1. A thermoformable polymeric multilayer reflective body (10) having substantially uniform reflectivity over substantially the entire range of the visible spectrum, comprising:
at least first and second diverse polymeric materials (A,B) differing from each other in refractive index by at least 0.03, the body comprising a sufficient number of alternating layers (12,14) of said first and second polymeric materials (A,B) such that at least 40 percent of visible light incident on said body is reflected, a substantial majority of the individual layers (12,14) of said body having optical thicknesses such that the sum of the optical thicknesses of the layers in a repeat unit of said alternating layers is greater than 190 nm, wherein the multilayer body has a gradient of optical layer repeat unit thicknesses spanning a range of optical repeating unit thicknesses of at least 190 nm to a value of 340 nm times a predetermined draw ratio of the initial to final thickness of the body of at least 1.25, whereby on thermoforming at said draw ratio substantially uniform reflectivity over substantially the entire range of the visible spectrum for said body is maintained, characterised in that said gradient of optical layer repeat unit thicknesses is a quartic function.

2. A thermoformable polymeric multilayer reflective body (10) of Claim 1 wherein the wavelengths of first order reflections from the thinnest and the thickest of said optical layer repeat units differ by a factor of at least two.

3. A thermoformable polymeric multilayer reflective body of Claim 1 in which said first and second polymeric materials have a repeat unit AB, and the ratio of optical thicknesses between the first and the second polymeric materials within each repeat unit is 2:1.

4. A thermoformable polymeric multilayer reflective body of Claim 2 in which said polymeric materials are elastomers.

5. A thermoformable polymeric multilayer reflective body of any one of the preceding claims in which said quartic function which defines said gradient of optical layer repeat unit thicknesses is superimposed on a linear gradient.

6. The thermoformable polymeric multilayer reflective body of any one of the preceding claims wherein a substantial majority of the individual layers of said body have optical thicknesses in the range where the sum of the optical thicknesses in a repeat unit of said polymeric materials is between 190 nm and 1700 nm.

7. A thermoformable polymeric multilayer reflective body of any one of the preceding claims characterized in that the body has at least 1000 layers.

8. A thermoformable polymeric multilayer reflective body of any one of the preceding claims wherein at least 80 percent of visible light incident on said body is reflected.

9. A thermoformable polymeric multilayer variably reflective sheet of Claim 2 having a substantially uniform reflectivity over substantially the entire range of the visible spectrum while possessing a varying reflectance across the surface of said sheet.

10. A thermoformable polymeric multilayer reflective body as claimed in Claim 1 in which a colouring agent is incorporated into one or more of the individual layers of the polymeric body.

11. A thermoformable polymeric multilayer reflective body as claimed in Claim 10 wherein the colouring agent is a pigment or dye.

12. A thermoformable polymeric multilayer reflective body as claimed in Claim 1 in which said polymeric body is formed into a blow-moulded container, lighting-fixture, globe or reflector.

13. A birefringent light polarizer which reflects light anisotropically, comprising at least first and second diverse polymeric materials (A,B) differing from each other in refractive index by at least 0.03, said polarizer comprising a sufficient number of alternating layers (12,14) of said first and second polymeric materials (A,B) such that at least 50 percent of visible light in the plane of polarization is reflected, a substantial majority of the individual layers of said polarizer having optical thicknesses such that the sum of the optical thicknesses of the layer in a repeat unit of said alternating layers is greater than 190 nm, wherein the polarizer has a gradient of optical layer repeat unit thicknesses spanning a range of optical layer repeating unit thicknesses of at least 190 nm to a value of 340 nm times a predetermined draw ratio of the initial to final thickness of the body of at least 1.25, characterised in that said gradient of optical layer repeat unit thicknesses is a quartic function.

## Patentansprüche

1. Durch Wärme formbarer polymerer reflektierender Körper (10) aus mehreren Schichten, der im wesentlichen über den gesamten Bereich des sichtbaren Spektrums über im wesentliches einheitliches Reflexionsvermögen verfügt, umfassend
mindestens ein erstes und ein zweites davon verschiedenes polymeres Material (A, B), die sich im Brechungsindex um mindestens 0,3 voneinander unterscheiden, wobei der Körper eine ausreichende Anzahl alternierender Schichten (12, 14) aus dem ersten und dem zweiten polymeren Material (A, B) umfaßt, so daß mindestens 40 % des auf den Körper einfallenden sichtbaren Lichts reflektiert werden, wobei die überwiegende Mehrheit der einzelnen Schichten (12, 14) des Körpers solche optische Dicken aufweist, daß die Summe der optischen Dikken der Schichten in einer wiederkehrenden Einheit aus den alternierenden Schichten größer als 190 nm ist, wobei der mehrschichtige Körper einen Gradienten der Dicken der wiederkehrenden Einheit aus optischen Schichten aufweist, der einen Bereich von Dicken der wiederkehrenden Einheiten aus optischen Schichten von mindestens 190 nm bis zu einem Wert von 340 nm mal einem vorher festgelegtes Streckverhältnis der ersten bis zur letzten Dicke des Körpers von mindestens 1,25 überspannt, wobei bei der Wärmeformung bei diesern Streckverhältnis ein im wesentlichen einheitliches Reflexionsvermögen über den im wesentlichen ganzen Bereich des sichtbaren Spektrums für diesen Körper aufrechterhalten wird, dadurch gekennzeichnet, daß der Gradient der Dicken der wiederkehrenden Einheiten aus optischen Schichten eine Funktion 4. Grades ist.

2. Durch Wärme formbarer polymerer reflektierender Körper (10) aus mehreren Schichten gemäß Anspruch 1, in dem sich die Wellenlängen der Reflexionen erster Ordnung von den dünnsten und den dicksten der wiederkehrenden Einheiten aus optischen Schichten um einen Faktor von mindestens 2 unterscheiden.

3. Durch Wärme formbarer polymerer reflektierender Körper aus mehreren Schichten gemäß Anspruch 1, in dem das erste und das zweite polymere Material eine wiederkehrende Einheit AB aufweisen und das Verhältnis der optischen Dicken zwischen dem ersten und dem zweiten polymeren Material in jeder wiederkehrenden Einheit 2 : 1 beträgt.

4. Durch Wärme formbarer polymerer reflektierender Körper aus mehreren Schichten gemäß Anspruch 2, in dem die polymeren Materialien Elastomere sind.

5. Durch Wärme formbarer polymerer reflektierender Körper aus mehreren Schichten nach einem der vorstehenden Ansprüche, in dem die Funktion 4. Crades, die den Gradienten der wiederkehrenden Einheiten aus optischen Schichten definiert, über einen linearen Gradienten gelegt wird.

6. Durch Wärme formbarer polymerer reflektierender Körper aus mehreren Schichten nach einem der vorstehenden Ansprüche, in dem ein überwiegender Teil der einzelnen Schichten dieses Körpers optische Dicken in dem Bereich aufweisen, wo die Summe der optischen Dicken in einer wiederkehrenden Einheit aus den polymeren Materialien zwischen 190 nm und 1700 nm liegt.

7. Durch Wärme formbarer polymerer reflektierender Körper aus mehreren Schichten nach einem der vorstehenden Ansprüche, dadurch gekennzeichnet, daß der Körper mindestens 1.000 Schichten aufweist.

8. Durch Wärme formbarer polymerer reflektierender Körper aus mehreren Schichten nach einem der vorstehenden Ansprüche, in dem mindestens 80 % des auf den Körper einfallenden sichtbaren Lichts reflektiert werden.

9. Durch Wärme formbare polymere variabel reflektierende Bahn aus mehreren Schichten nach Anspruch 2, die ein im wesentliches einheitliches Reflexionsvermögen über den im wesentlichen ganzen Bereich des sichtbaren Spektrums aufweist und gleichzeitig über ein über die Oberfläche dieser Bahn variierendes Reflexionsvermögen verfügt.

10. Durch Wärme formbarer polymerer reflektierender Körper aus mehreren Schichten nach Anspruch 1, in dem ein Färbemittel in eine oder mehrere der einzelnen Schichten des polymeren inkorporiert ist.

11. Durch Wärme formbarer polymerer reflektierender Körper aus mehreren Schichten nach Anspruch 10, in dem das Färbemittel ein Pigment oder Farbstoff ist.

12. Durch Wärme formbarer polymerer reflektierender Körper aus mehreren Schichten nach Anspruch 1, der zu einem blasgeformten Behälter, einem Beleuchtungskörper, einer Kugel oder einem Reflektor geformt wird.

13. Doppelbrechender Lichtpolarisator, der Licht anisotrop reflektiert, umfassend
mindestens ein erstes und ein zweites polymeres Material (A, B), die sich im Brechungsindex um mindestens 0,03 voneinander unterscheiden, wobei der Polarisator eine ausreichende Anzahl alternierender Schichten (12, 14) aus dem ersten und dem zweiten polymeren Material (A, B) umfaßt, so daß mindestens 50 % des sichtbaren Lichts in der Polarisationsebene reflektiert werden, wobei die überwiegende Mehrheit der einzelnen Schichten des Polarisators solche optische Dicken aufweist, daß die Summe der optischen Dicken der Schichten in einer wiederkehrenden Einheit aus den alternierenden Schichten größer als 190 nm ist, wobei der Polarisator einen Gradienten der Dicken der wiederkehrenden Einheit aus optischen Schichten aufweist, der einen Bereich von Dicken der wiederkehrenden Einheiten aus optischen Schichten von mindestens 190 nm bis zu einem Wert von 340 nm mal einem vorher festgelegten Streckverhältnis der ersten bis zur letzten Dicke des Körpers von mindestens 1,25 überspannt, dadurch gekennzeichnet, daß der Gradient der Dicken der wiederkehrenden Einheiten aus optischen Schichten eine Funktion 4. Grades ist.

## Revendications

1. Un corps réflecteur multicouche en polymère thermoformable (10) présentant une réflectivité essentiellement uniforme sur essentiellement la totalité du domaine du spectre visible comportant:
au moins des premier et second matériaux polymères divers (A, B) différant l'un de l'autre par l'indice de réfraction, d'au moins 0,03, le corps comportant un nombre suffisant de couches alternées (12, 14) desdits premier et second matériaux polymères (A, B) de sorte qu'au moins 40% de la lumière visible incidente sur ledit corps est refléchie, une majorité essentielle des couches individuelles (12, 14) dudit corps ayant des épaisseurs optiques telles que la somme des épaisseurs optiques des couches dans un motif répétitif desdites couches alternées est supérieure à 190 nm, le corps multicouche ayant un gradient d'épaisseur de motifs répétitifs optiques d'au moins 190 nm, jusqu'à une valeur de 340 nm fois un rapport d'étirage prédéterminé de l'épaisseur initiale à l'épaisseur finale du corps d'au moins 1,25, de sorte que, lors d'un thermoformage, selon ledit rapport d'étirage, une réflectivité essentiellement uniforme sur essentiellement la totalité du domaine du spectre visible pour dudit corps est maintenue, caractérisé en ce que ledit gradient des épaisseurs des motifs répétitifs de couches optiques est une fonction quartique.

2. Un corps réflecteur multicouche en polymère thermoformable (10) de la revendication 1, dans lequel les longueurs d'onde des réflexions de premier ordre, c'est-à-dire que le plus fin et de le plus épais desdits motifs répétitifs de couche optique diffère d'un facteur d'au moins deux.

3. Un corps réflecteur multicouche en polymère thermoformable de la revendication 1, dans lequel lesdits premier et second matériaux polymères possèdent un motif répétitif A B, et le rapport des épaisseurs entre les premier et second matériaux polymères à l'intérieur de chaque motif répétitif est de 2:1.

4. Un corps réflecteur multicouche en polymère thermoformable de la revendication 1, dans lequel lesdits matériaux polymères sont des élastomères.

5. Un corps réflecteur multicouche en polymère thermoformable de l'une quelconque des revendications précédentes, dans lequel ladite fonction quartique qui définit ledit gradient des épaisseurs des motifs répétitifs de couche optique est superposé sur un gradient linéaire.

6. Le corps réflecteur multicouche en polymère thermoformable de l'une quelconque des revendications précédentes, dans lequel, une majorité essentielle des couches individuelles dudit corps ont des épaisseurs optiques dans la gamme où la somme des épaisseurs optiques dans un motif répétitif desdits matériaux polymères se situe entre 190 nm et 1700 nm.

7. Un corps réflecteur multicouche en polymère thermoformable de l'une quelconque des revendications précédentes, caractérisé en ce que le corps comporte au moins 1000 couches.

8. Un corps réflecteur multicouche en polymère thermoformable de l'une quelconque des revendications précédentes, dans lequel, au moins 80% de la lumière visible incidente sur ledit corps est réfléchie.

9. Une feuille réflectrice, de façon variable, multicouche en polymère thermoformable de la revendication 2, présentant une réflectivité essentiellement uniforme sur essentiellement la totalité du domaine du spectre visible tout en possédant une réflectance variable à travers la surface de ladite feuille.

10. Un corps réflecteur multicouche en polymère thermoformable tel que revendiqué dans la revendication 1, dans lequel un agent colorant est incorporé dans une ou plus d'une couche individuelle du corps polymère.

11. Un corps réflecteur multicouche en polymère thermoformable tel que revendiqué dans la revendication 10, dans lequel l'agent colorant est un pigment ou un colorant.

12. Un corps réflecteur multicouche en polymère thermoformable tel que revendiqué dans la revendication 1, dans lequel ledit corps polymère est conformé en conteneur, en globe d'appareil d'éclairage ou en réflecteur, moulés par soufflage.

13. Un polariseur de lumière biréfringent qui reflète anisotropiquement la lumière, comportant au moins des premiers te seconds matériaux polymères (A, B) différents l'un de l'autre par leur indice de réfraction d'au moins 0,03, ledit polariseur comportant un nombre suffisant de couches alternées (12, 14) desdits premier et second matériaux polymères (A, B) de sorte qu'au moins 50 pour-cent de la lumière visible dans le plan de polarisation est réfléchie, une majorité essentielle des couches indviduelles dudit polariseur ayant des épaisseurs optiques telles que la somme des épaisseurs optiques de la couche dans un motif répétitif desdites couches alternées est supérieure à 190 nm, de sorte que le polariseur possède un gradient d'épaisseur de motif répétitif de couche optique recouvrant une gamme d'épaisseurs de motifs répétitifs de couche optique d'au moins 190 nm jusqu'à une valeur de 340 nm fois un rapport d'étirage prédéterminé de l'épaisseur initiale à l'épaisseur finale du corps d'au moins 1,25, caractérisé en ce que ledit gradient d'épaisseurs de motifs répétitifs de couche optique est une fonction quartique.
